# EUROPEAN PATENT SPECIFICATION

(11) **EP 2 361 891 B1**
(45) Date of publication and mention of the grant of the patent: **01.07.2020**
(21) Application number: 11152272.8
(22) Date of filing: 26.01.2011
(51) Int. Cl.: C03C 1/00, G21F 9/30

(54) **Method of disposal of radioactive waste in silica glass**
Verfahren zur Endlagerung von radioaktivem Abfall in Kieselglas
Procédé du rejet d'effluents radioactifs dans verre de silice

(30) Priority: 16.02.2010 PL 39046710
(43) Date of publication of application: 31.08.2011
(73) Proprietor: Instytut Chemii i Techniki Jadrowej, 03-195 Warszawa (PL)
(72) Inventor: Chmielewski, Andrzej G., 04-802, Warszawa (PL); Deptula, Andrzej, 00-544, Warszawa (PL); Milkowska, M Magdalena, 05-074, Halinów (PL); Lada, M Wieslawa, 00-172, Warszawa (PL); Olczak, M Tadeusz, 03-285, Warszawa (PL)

(56) References cited:
- EP-A2- 1 876 149
- US-A- 5 494 863
- POTAPOV ET AL: "Low-temperature immobilization of liqiud radioactive waste using silica from concentrated hydrothermal solutions", RADIOCHEMISTRY, vol. 51, no. 6, 2009, pages 638-643, XP002636781, ISSN: 1066-3622, DOI: 10.1134/S1066362209060149
- I W Donald ET AL: "Review The immobilization of high level radioactive wastes using ceramics and glasses", JOURNAL OF MATERIALS SCIENCE, 1 January 1997 (1997-01-01), pages 5851-5887, XP055645759, Retrieved from the Internet: URL:http://citeseerx.ist.psu.edu/viewdoc/d ownload?doi=10.1.1.628.229&rep=rep1&type=p df

## Description

### Technical Field

The subject of the invention is the method of disposal of radioactive waste to be approved by them in persistent structure of glasses, in particular in silica glass.

### Background Art

Intensive economic development in the world in the second half of the 20th century have caused much greater demand for electricity and the continuous fossil fuel prices growth has resulted in increasing the interest in nuclear energy. Nuclear power stations work safely, cheaply, ensuring clean sky, clean soil and water, and practically not emitting any pollution into the atmosphere. One of the main problems to be resolved in the case of decommissioning is how store disposal of radioactive waste. In this connection in the world developed are increasingly perfect methods of waste treatment and improve used already, so as to become more efficient, secure and cheaper (M. J. Ojovan, J. M. Juoi, E. Lee "Application of glass composite materials for nuclear waste immobilization" J. Pak Mater Soc 2008, 2 (2)).

Spent fuel is classified as waste (HLW) high-level, since it contains highly radioactive, short and long life of the fission fragments (HLW is from 50 to 60 of elements). In spent fuel there are: plutonium (below 0.02%), uranium (less than 3%), minor actinide: e.g., Am, Cm (including from 2-3%) and in greater quantities: Ru, Pd, Cs, Sr (1-10%). Reprocessing of spent fuel rods normally involves removal of the cladding material followed by dissolution in nitric acid according to Donald et. al. "Review: The immobilization of high level radioactive wastes using ceramics and glasses", J. Mat. Sci., 1997, 32, pages 5851-5887. In not yet used the methods of disposal of waste nitrates elements HLW was by sorption solution matrix prepared on the basis of ceramics, pottery or glass. The final step is to high conversion in finished product in which the elements are in permanent HLW structures of the chemical. Process of solidity of radioactive waste is a very complicated.

In recent years, increasing interest among the methods of disposal of radioactive waste, the method raises the HLW waste tempering. Most porous dies is prepared from classical mastery of powders SiO₂ oxides or/and carbonates other ingredients. After saturation material matrix with HLW classic reaction moulding glasses is carried out at temperatures above 1500° C.

It is known that a significant simplification of the process of formation of the reflectors is gaining by sol-gel method. The advantage of the application of this process is lowering the temperature of the forming of the glass and the possibility of their synthesis in various forms of physical (powders, fibers, monolith, porous structure). This process also allows to obtain high homogeneity of the finished product waste tempering.

It is known the way to receive sol-gel method of porous glasses for example. SiO₂ as the matrices for sorption of radioactive waste. In this method, as it is necessary to the use of catalytic converters usually hydrochloric acid and ammonia solution (T. Woignier,J. Reynes,J Phalippou, J. L. Dussossoy "Nuclear waste storage in gel-derived materials"J. Sol-Gel Sci. Tech 2000, 19 (833); T. Woignier,J. Reynes, J.Phalippou, J. L. Dussossoy "Sinterred silica aerogel: host matrix for long life nuclear wastes"J. Non-Crystalline Solids, 1998, 225 (353)). As well, US 5,494,863 and EP 1 876 149 describe sol-gel processes for disposal of radioactive waste.

However, in the available literature not found information about incorporated in the structure of silica glass radioactive waste during his direct synthesis.

It is known the way to obtain various kinds of chemical compounds the original variant of sol-gel method known as CSGP - a comprehensive of Sol-Gel process (patent PL172618 - ICHTJ), in which as a complexes factor apply Ascorbic acid (ASC).

This process was used successfully in many synthesizes e.g. to receive the oxides and oxide compounds (titanium dioxide, titanium's Li, Ba, Sr; temperatures superconductors; bioceramic; tungsten oxide materials; and the cathode materials consisting of battery (Li-Mn-Co-Ni-O)). The obtained results are described in the patent granted PL172618 ("Method of manufacturing temperatures superconductors"; PL198039 ("Obtaining titanium dioxide and titanium's lithium and barium from Titanium tetrachloride"); PL180602 ("Method of receive calcium phosphate layers, in particular hydroxyapatite").

CSGP Process has never been used to receive the lenses and in particular to inline elements, metals.

Research structures of the x-ray showed that received the material there are bandwidth characteristic of oxides of metals and materials containing all components are amorphous.

The advantage of the method of the application for obtaining the reflectors CSGP with built-in radioactive elements is not only a reduction in the temperature of the receiving end of a homogeneous product, but a strong background of radionuclides in the structure of glass received direct synthesis.

### Summary of invention

The present invention provides a method of disposal of radioactive waste according to claim 1. The way the disposal of radioactive waste in silica glass be approved by obtaining the silica glass with embedded in its structure, is that which is a model for cobalt radioactive waste, according to the invention, to the cobalt nitrate solution in ethanol is added using the bright blend tetraethoxysilane (TEOS) dilute ethanol, then ascorbic acid. Then the mixture is mixed at room temperature 2 to 5 hours, preferably 4 hours, leading a preliminary hydrolysis, and obtained silica-hydroxy-nitrate-Ascorbic acid sol with cobalt submit to the subsequent hydrolysis in the second stage of hydrolysis and polymerization in temperature about of 40 ° C to 80 ° C, favorably 70°C and then it is evaporated to dryness under reduced pressure 0.1MPa. Obtained gel are subjected to a heat treatment in a 1200°C for 4 hours from the heating rate of 2 ° C/min.

The final product obtained at a temperature of 1200 °C is silica glass with cobalt permanently built-in in the structure.

The way the disposal of radioactive waste in silica glass to be approved by receiving the silica with a built-in in its structure, since that is a model for HLW according the invention is that, for the solution of TEOS in ethanol is added the cesium nitrate solution and then dropping ascorbic acid. Then the mixture is mixed at room temperature 2 to 5 hours, preferably 4 hours, leading a preliminary hydrolysis, and obtained silica-hydroxy-nitrate-Ascorbic acid sol with cesium submit subsequent hydrolysis in the second stage of hydrolysis and polymerization in about temperature of 40°C - 80°C, favorably, 70°C, and then it is evaporated to dryness under reduced pressure 0.1MPa. So obtained gel are subjected to a heat treatment in a 1200°C for 4 hours from the heating rate of 2 ° C/min.

The final product obtained at a temperature of 1200°C is silica glass with cesium permanently embedded in the structure.

The way the disposal of radioactive waste in silica glass to be approved by receiving the silica with a built-in in its structure, which is a model for strontium HLW, according to the invention is that, to the solution TEOS in ethanol is added the solution of strontium nitrate and dropping of ascorbic acid. Then the mixture is mixed at room temperature 2 to 5 hours, preferably 4 hours, leading a preliminary hydrolysis, and obtained silica-hydroxy-nitrate-Ascorbic acid sol with strontium and submit subsequent hydrolysis in the second stage of hydrolysis and polymerization in about temperature of 40°C - 80°C favorably 70°C and then it is evaporated to dryness under reduced pressure 0.1MPa. So obtained gel are subjected to a heat treatment in a 1200°C for 4 hours from the heating rate of 2 ° C/min.

The final product obtained at a temperature of 1200°C is silica glass with strontium permanently embedded in the structure.

The way the disposal of radioactive waste in silica glass to be approved by receiving the silica with a built-in in its structure, which is a model for neodymium HLW, according to the invention is that, to the neodymium nitrate solution in ethanol is added using the bright blend tetraethoxysilane (TEOS) dilute ethanol and then Ascorbic acid solution. Then the mixture is mixed at room temperature 2 to 5 hours, preferably 4 hours, leading a preliminary hydrolysis, and obtained silica-hydroxy-nitrate-Ascorbic acid sol with neodymium submit subsequent hydrolysis in the second stage of hydrolysis and polymerization in about temperature of 40°C - 80°C favorably 70°C and then it is evaporated to dryness under reduced pressure 0.1MPa. So obtained gel are subjected to a heat treatment in a 1200°C for 4 hours from the heating rate of 2 °C/min.

The final product obtained at a temperature of 1200°C is silica glass with neodymium permanently built-in in the structure.

Experiments have shown that the process of CSGP may be used for all metallic elements appearing in the HLW as well as for other metallic elements appearing in the radioactive waste.

In the way according to the invention, the ratio of molar MeO to SiO₂, is as 5-30 % for MeO to 70-95 % for SiO₂, preferably 10:90. Me means cobalt, neodymium, strontium or cesium for all layouts.

In the way according to the invention, the favorable ratio of molar TEOS: ethanol (solvent): H₂O (water): Ascorbic acid (converter) is 0.5-1: 3-5: 15-20: 0.02-0.03, preferably 0.9: 3.6: 18: 0.027 for all layouts.

Manner by the invention is that, for MeO: SiO₂ added organic acid, preferably ascorbic acid.

Overlookable advantage way according to the invention is the application process, CSGP (Ascorbic acid as a catalyst) because it allows you to receive the silica glass with integrated permanently into the structure of metallic element as: Co, Cs, Sr, Nd over this very shortens and simplifies the procedural cycle (reduction of pressure and temperature about to 70° C causes that second stage hydrolysis and polymerization is much faster) and the thermal treatment is limited to only 4 hours in 1200 °C. The above mentioned benefits reduce the costs of the process and most importantly, allow you to permanently bind a metallic elements with the structure of the glass and, in particular, the silica glass.

### Description of embodiments

The examples given below illustrate the invention.

**Example I.** To 1 M cobalt nitrate solution in ethanol production company POCH Polmos added a stirring 187.2 ml tetraethoxysilane (TEOS) Aldrich, dilute ethanol in quantities 165.6 ml and then slowly droppable 324ml 0.0008 M solution of Ascorbic acid (L-ascorbic acid) Aldrich. After four hours of mixing at room temperature - preliminary hydrolysis. The second stage of hydrolysis and polymerization obtained silica-hydroxy-nitrate-Ascorbic acid sol with cobalt perpetrated in Company Buchi evaporator in temperature about of 70° C and then evaporated it to dryness under pressure 0.1 MPa. So obtained the gel has undergone heat treatment in a 1200 °C (oven with software company Carbolite). Roasting perpetrated by 4 hours and the speed of the investigation to a temperature of 1200 °C is 2°C/min Received the final product at a temperature of 1200 ° c glass silica with cobalt permanently built-in in the structure of the glass.

What is confirmed, the leading thermal analysis of the product obtained using derywatograf IMO Hungarian highlights in this way the temperature of the calcinations and synthesis. Physico-chemical characteristics of the product as received after ignition in 1200°C for 4 hours examined using a scanning microscope (Zeiss DSM 942), determined X using diffractometr Rigaku Miniflex from radiation Cu α-K and spectrometer to study in infrared Brüker-Equinox 55.

Research structures of the x-ray showed that received the material there are bandwidth characteristic of oxides of metals and materials containing all components are amorphous, and infrared test results have shown a lack of pollutants.

**Example II.** To solution 187.2 ml tetraethoxysilane (TEOS) dilute ethanol in quantities of 265.6 ml added 124 ml 0.0008 M cesium nitrate solution company Alpha Cesar stirring and then slowly dropped 200 ml 0.00014 m solution of Ascorbic acid. After four hours of mixing at room temperature where there is a preliminary hydrolysis, obtained silica-hydroxy-nitrate-Ascorbic acid sol with cesium handled the second stage of hydrolysis and polymerization in about temperature of 70°C and then evaporated it to dryness under pressure 0.1 MPa. So obtained gel handled heat treatment in a 1200°C as in the example and received the final product at a temperature of 1200°C silica glass with cesium permanently embedded in the glass structure.

What is confirmed, the leading thermal analysis and the analysis of the physico-chemical properties of the product as received, as in the example I.

**Example III.** To solution 187.2 ml tetraetoksysilan (TEOS) dilute ethanol in quantities of 265.6 ml stirring had 44 ml 0.0023 m solution of strontium nitrate company Alpha Cesar and then slowly dropped 280 ml 0.0001 m solution of Ascorbic acid. After four hours of mixing at room temperature where there is a preliminary hydrolysis, obtained silica-hydroxy-nitrate-Ascorbic acid sol from the second stage of hydrolysis strontium handled and polymerization in about temperature of 70°C and then evaporated it to dryness under pressure 0.1 MPa. So obtained gel handled heat treatment in a 1200°C as above. The final product obtained at a temperature of 1200°C glass silica with strontium permanently built-in in the structure of the glass.

What is confirmed, the leading thermal analysis and the analysis of the physico-chemical properties of the product as received, as in the example I.

Example IV. To 1 M solution of nitrate neodymium company POCH in ethanol have been stirring 187.2 ml tetraethoxysilane (TEOS) dilute ethanol in quantities 165.6 ml and then slowly dropped 324 ml 0.0008 m solution of Ascorbic acid. After four hours of mixing at room temperature - preliminary hydrolysis. The second stage of hydrolysis and polymerization obtained silica-hydroxy-nitrate- Ascorbic acid sol neodymium perpetrated in about temperature of 70°C and then evaporated it to dryness under pressure 0.1 MPa. So obtained gel handled heat treatment in a 1200 ° as above. The final product Obtained at a temperature of 1200°C glass silica with a built-in neodymium permanently in glass structure.

What is confirmed, the leading thermal analysis and the analysis of the physico-chemical properties of the product obtained as in the example I.

## Claims

1. The method of disposal of radioactive waste, containing cobalt, neodymium, strontium or cesium, to be approved by, permanently embeded it into silica glass, **characterized in that**, cobalt neodymium, strontium or cesium nitrates solution in ethanol, is added to tetraethoxysilane (TEOS), a bright blend thereof in the case of cobalt and neodymium nitrates, dilute in ethanol, and then ascorbic acid solution, dropwise in case of cesium or strontium nitrates, after which the mixture is mixed at room temperature for 2 to 5 hours, favorably for 4 hours, leading a preliminary hydrolysis, then obtained silica-hydroxy-nitrate-ascorbic acid sol with cobalt, neodymium, strontium or cesium, undergo further hydrolysis, in the second stage of hydrolysis and polymerization, at a temperature of 40°C - 80°C, favorably 70°C and then it is evaporated to dryness under reduced pressure 0.1 MPa, and obtained gel is subjected to a heat treatment in a 1200°C, favorably by approximately 4 hours from the heating rate of 2 °C/min to the receipt of the final product silica glass with cobalt, neodymium, strontium or cesium permanently built into its structure.

2. Method of claims 1, wherein the molar ratio MeO to SiO₂ where Me means cobalt, neodymium, strontium or cesium, is different for different elements of metals and is from 10:90 molar ratio.

3. Method of claim 1, wherein the molar ratio MeO to SiO₂, where Me means cobalt, neodymium, strontium, or cesium, is 5-30% for MeO and 70-95% SiO2.

4. Method of claims 1, wherein the molar ratio TEOS : ethanol : H₂O : ascorbic acid is 0.5-1: 3-5: 15-20: 0.02-0.03, preferably 0.9: 3.6: 18: 0.027.

## Patentansprüche

1. Das Verfahren zur Entsorgung radioaktiver Abfälle, die Kobalt, Neodym, Strontium oder Cäsium enthalten, die in Quarzglas dauerhaft eingebaut werden, **gekennzeichnet dadurch, dass** in eine Lösung von Kobalt-, Neodym-, Strontium- oder Cäsiumnitrat in Ethanol das Tetraethoxysilan (TEOS) zugegeben wird, die mit Ethanol verdünnte Mischung aus Kobalt- und Neodymnitraten und die Lösung von Ascorbinsäure werden zu Cäsium- und Strontiumnitraten tropfenweise zugesetzt, dann wird die Mischung bei Raumtemperatur 2 bis 5 Stunden lang, vorzugsweise 4 Stunden lang, gemischt, indem eine Vorhydrolyse erfolgt, dann wird das erhaltene Kieselsäure-Hydroxy-Stickstoff-Ascorbinsol mit Kobalt oder Neodym, Strontium oder Cäsium in der zweiten Stufe der Hydrolyse weiter hydrolysiert und einer Polymerisation bei 40 °C - 80 °C, vorzugsweise 70°C unterzogen, und dann unter reduziertem Druck von 0,1 MPa bis zum Trocknen verdampft, und das auf diese Weise erhaltene Gel wird einer Wärmebehandlung bei 1200 °C, vorzugsweise etwa 4 Stunden lang bei einer Aufheizgeschwindigkeit von 2 °C/min, unterzogen, bis das Endprodukt aus Quarzglas erhalten wird, in dessen Struktur Kobalt oder Neodym, Strontium oder Cäsium dauerhaft eingebettet ist.

2. Das Verfahren nach dem Anspruch 1, **gekennzeichnet dadurch, dass** das molare Verhältnis von MeO zu SiO2, wobei Me je nach Art des Metallelementen Kobalt, Neodym, Strontium oder Cäsium bedeutet, zwischen 10 und 90% molar liegt.

3. Das Verfahren nach dem Anspruch 1, **gekennzeichnet dadurch, dass** das molare Verhältnis von MeO zu SiO2, wobei Me Kobalt, Neodym, Strontium oder Cäsium bedeutet, wie 5-30% von MeO zu 70-95% von SiO2% beträgt.

4. Das Verfahren nach dem Anspruch 1, **gekennzeichnet dadurch, dass** das molare Verhältnis von TEOS : Ethanol : H₂O : Ascorbinsäure 0,5-1 : 3-5 : 15-20 : 0,02-0,03, vorzugsweise 0,9 : 3,6 : 18 : 0,027 beträgt.

## Revendications

1. Procédé d'élimination des déchets radioactifs contenant du cobalt, du néodyme, du strontium ou du césium enrobés en permanence dans du verre de silice, **caractérisé en ce que** du tétraéthoxysilane (TEOS) est ajouté à une solution de nitrate de cobalt, néodyme, strontium ou césium dans l'éthanol, un mélange de cobalt et de nitrate de néodyme dilué dans de l'éthanol et une solution d'acide ascorbique est ajoutée goutte à goutte aux nitrates de césium et de strontium, après quoi le mélange est agité à température ambiante pendant 2 à 5 heures, de préférence pendant 4 heures, en effectuant l'hydrolyse initiale, puis le sol de silice-hydroxy-nitrate-ascorbique obtenu avec du cobalt ou du néodyme, du strontium ou du césium est soumis à une hydrolyse supplémentaire dans la deuxième étape d'hydrolyse et de polymérisation à 40°C-80°C, de préférence 70°C, puis il est évaporé à sec sous pression réduite 0,1 MPa, et le gel ainsi obtenu est soumis à un traitement thermique à 1200°C, de préférence pendant environ 4 heures à une vitesse de chauffe de 2°C/min, pour obtenir le produit final de verre de silice avec du cobalt ou du néodyme , le strontium ou le césium incrustés en permanence dans sa structure.

2. Procédé selon la revendication 1, **caractérisé en ce que** le rapport molaire de MeO à SiO₂, où Me est le cobalt, le néodyme, le strontium ou le césium, selon le type d'éléments métalliques, varie de 10 à 90% en moles.

3. Procédé selon la revendication 1, **caractérisé en ce que** le rapport molaire de MeO à Si02 où Me est le cobalt, le néodyme, le strontium ou le césium est de 5-30% pour MeO à 70-95% pour SiO₂.

4. Procédé selon la revendication 1, **caractérisé en ce que** le rapport molaire TEOS : éthanol: H₂O: acide ascorbique est de 0,5-1: 3-5: 15-20: 0,02-0,03, de préférence 0,9: 3,6: 18: 0,027
